Europäisches Patentamt

(19) European Patent Office

Office européen des brevets

(11) Publication number: **0 064 857**
**A2**

## (12) EUROPEAN PATENT APPLICATION

(21) Application number: **82302280.1**

(22) Date of filing: **05.05.82**

(51) Int. Cl.³: **B 65 G 53/12**

(30) Priority: **12.05.81 GB 8114533**

(43) Date of publication of application:
**17.11.82 Bulletin 82/46**

(84) Designated Contracting States:
**BE DE FR**

(71) Applicant: **Coal Industry (Patents) Limited**
**Hobart House Grosvenor Place**
**London SW1X 7AE(GB)**

(71) Applicant: **STURTEVANT ENGINEERING COMPANY**
**LIMITED**
**Westergate Road Moulsecoomb Way**
**Brighton Sussex(GB)**

(72) Inventor: **Foster, Christopher**
**The Old Coach House**
**Northleach Gloucestershire(GB)**

(72) Inventor: **Leigh, Thomas Ronald**
**3 Lomond Avenue**
**Brighton Sussex(GB)**

(74) Representative: **Wood, John Irwin**
**Hobart House Grosvenor Place**
**London SW1X 7AE(GB)**

(54) Improvements in and relating to the conveyance of particulate material.

(57) Particulate material, for example coal, is conveyed by means of apparatus including a hopper (2;), a valve (18) and a gas injector (20). Material in the hopper (2) is pressurised to force material into the pipe (16) up to the valve (18) which opens and then closes. Material downstream of the valve (18) is propelled along the pipe (16) by an impulse of gas injected at (20) after the valve (18) has been closed. The cycle can be repeated.

FIG 1

EP 0 064 857 A2

## IMPROVEMENTS IN AND RELATING TO THE

## CONVEYANCE OF PARTICULATE MATERIAL

The present invention relates to improvements in the conveyance of particulate material in the dense phase and specifically to conveying such particulate material pneumatically from a storage means, such as a hopper, along a delivery pipe.

It is known to convey cohesive particulate material pneumaticaaly in the dense phase, for example as described in British Patent Specification No. 1248614, but operation of the system depends on the particulate material being cohesive so that there is little loss of gas pressure through the particulate material.

For less cohesive particulate material, it is known to convey such material from a hopper along a discharge pipe by filling the hopper with material and then discharging the entire contents of the hopper by applying a high pressure jet of gas to the hopper outlet to propel the material along the delivery pipe. This provides substantial quantities of material but at relatively large time intervals.

There is a need, for example for fluidised bed combustion boilers or indeed coal fired boilers generally, for a conveying apparatus which feeds the coal to the boiler at a relatively constant relatively slow rate. Coal feed to such boilers is presently obtained purely mechanically, for example by means of a screw conveyor, but this is not found to be entirely satisfactory.

According to a first aspect of the present invention there is provided apparatus for conveying particulate material from storage mean along a delivery pipe, the apparatus comprising storage means having an inlet for particulate material and an outlet connected to one end of a delivery pipe, means for supplying gas under pressure to the material in the storage means, a valve in the delivery pipe, a gas vent located in the delivery pipe upstream of the valve and connected with the delivery pipe downstream of the valve, and gas introduction means for introducing gas under pressure into the delivery pipe adjacent to the valve, the valve and gas introduction means being operated cyclically to cause discrete quantities of the material in the storage means to be conveyed along the pipe.

Conveniently the valve is located in the delivery pipe adjacent the outlet of the storage menas which may be in the form of a hopper.

The valve and the gas introduction means are preferably positioned adjacent one another, the valve being upstream of the gas introduction means. The vent is connected into the delivery pipe downstream of the valve by means of a by-pass line incorporating a control valve.

The gas introduction means is preferably adapted to provide a flow of gas under pressure directed along the discharge pipe in the conveying direction. The means may for example include an annular wall provided with a plurality of gas inlets each inclined to the axis of the pipe in the conveying direction, for example at 45°.

The inlet of the storage means is closable by means of a valve.

All the valves and the gas introduction means have associated controls to enable them to be operated cyclically for set or variable periods of time.

According to a second aspect of the present invention, a method of operating the apparatus of the first aspect includes the steps of charging the storage means with particulate material, pressurising the storage means whilst maintaining the valve in the delivery pipe shut, opening the control valve in the by pass line momentarily to vent the delivery pipe thereby to allow the particulate material in the delivery pipe to move to the valve, opening the valve to allow the passage of a discrete quantity of particulate material, closing the valve, and introducing gas through the gas introduction means thereby to propel the discrete quantity of particulate material along the delivery pipe for discharge.

The timing of each step in the cycle sequence is dependent upon the amount of material required for delivery and the frequency of the delivery of the discrete amounts of material conveyed by the apparatus.

The cycle sequence may be repeated dependent upon demand.

The pressure employed for the storage means is sufficient to effect movement of the material along the delivery pipe up to the valve and there through to the gas introduction means. The pressure of gas introduced is of a level adequate to propel the material along the pipe. It is to be understood that the values of gas pressure applied to both the storage means and the gas introduction means may be varied to provide different delivery rates.

According to a third aspect of the present invention there is provided a method of conveying particulate material from storage means along a discharge pipe connected to the outlet of the storage means, the delivery pipe being provided with a valve and gas introduction means for introducing gas under pressure into the delivery pipe, the method comprising supplying fluid under pressure to the material in the storage means and operating the valve and gas introduction means cyclically to cause discrete quantities of the material to be conveyed along the delivery pipe.

The valve and gas introduction means are located immediately adjacent each other with the valve upstream of the gas introduction means and the two are operated alternately each cycle. Thus in a cycle the valve is closed when the gas introduction means is operated to propel the material downstream of the valve in the conveying direction. After a predetermined time, the gas supply to the gas introduction means is cut off and the valve is opened to allow material to flow from the storage means. The valve is then closed and the cycle recommences.

By way of example only, one embodiment of apparatus for conveying particulate material and a method therefor according to the invention are described below with reference to the accompanying drawings in which:

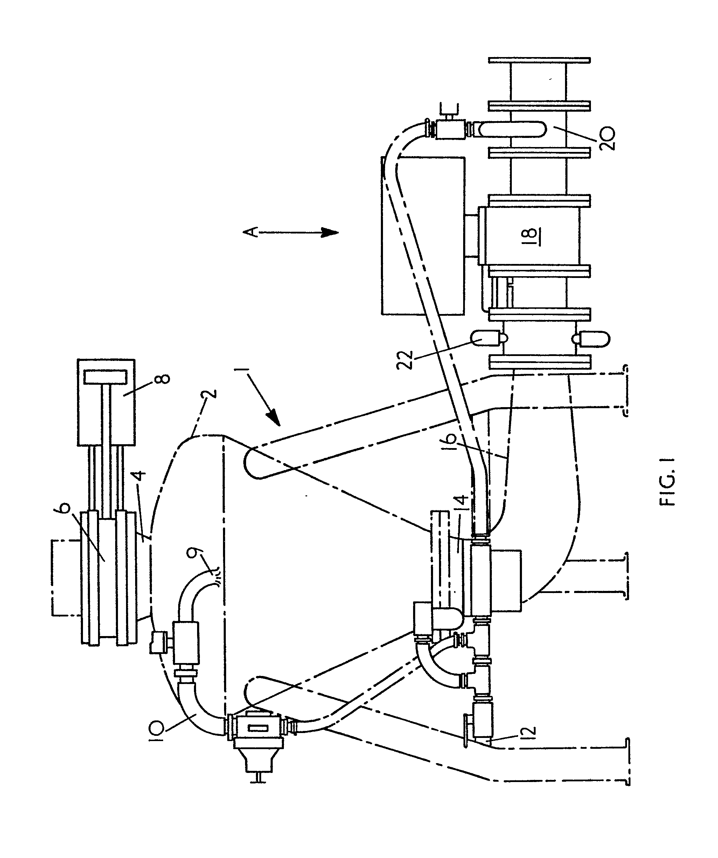

Figure 1 is a side elevation of the apparatus;

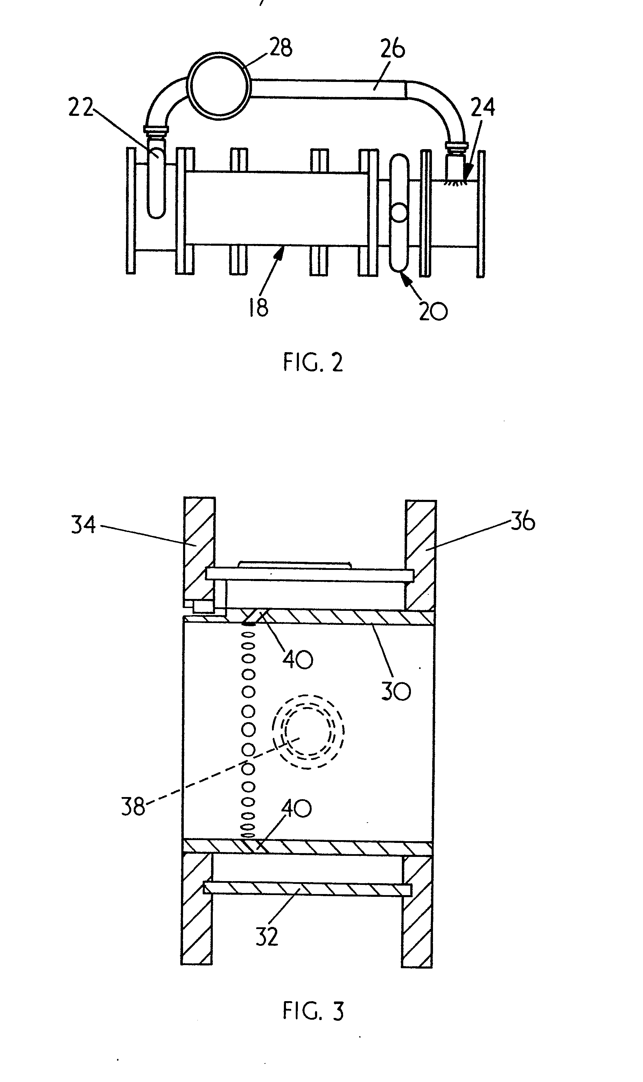

Figure 2 is a plan view on the arrow A of a part of the apparatus of Figure 1; and

Figure 3 is an axial section through a detail of the apparatus of Figure 1.

Referring to the drawings, the apparatus for conveying particulate material is shown generally at 1 and includes storage means in the form of a hopper 2 having an inlet 4 provided with a gate valve 6 operable by means of a servo unit 8. The hopper 2 has a gas inlet 9 for the introduction of gas, e.g. air, under pressure. A gas supply line 10 feeds gas to the inlet 9 and is teed into a gas main 12.

The hopper 2 has an outlet 14 to which is connected a delivery pipe 16 having therein a valve 18 upstream of a gas introduction means 20. The valve 18 may be a conventional ball valve. A vent 22 is provided upstream of this valve 18 and communicates with the delivery pipe 16 downstream of the gas introduction means 20 at a location 24 via a by pass line 26 which incorporates a control valve 28. The vent 22 may be constructionally of a similar form to the gas introduction means 20 to be described.

The gas introduction means 20 comprises an annular wall 30 having the same internal diameter as that of the delivery pipe 16 and surrounded by an outer annular wall 32. The annular space between the walls 30,32 is closed at the two ends by flanges 34,36 by which the gas introduction means are connected to corresponding pipe flanges. Gas, for example air, under pressure is supplied to the annular space via one or more inlets 38 provided in the annular wall 30 and wall 30 is provided with a plurality of passages 40 by which gas is supplied to the interior of the gas introduction means, the passages 40 being angularly spaced around the wall 30 and each being inclined in the conveying direction at, for example, 45°. As an example thirty-six passages 40 may be provided equi-angularly spaced around the wall 30.

As an example only, the apparatus just described is employed as a coal feed unit for a boiler (not shown), which may be a fluidised bed combustion boiler. In operation, upon receiving a signal from the boiler that coal feed is required, the valve 6, which is normally closed, opens by actuation of the servo unit 8, to allow passage of coal through the inlet 4 of the hopper 2 to charge the hopper with coal. After a set period of time, the valve 6 closes. The hopper 2 is then pressurised by air injected via the inlets 9; the level of pressure may be, for example, 20 psi (1.4 Kgf/cm2). Some of the coal in the hopper 2 is caused to discharge through the outlet 14 to enter the delivery pipe 16, the control valve 28 and the valve 18 being closed. The control valve 28 is then opened for a short time, for example of the order of 2 seconds, and vents the pipe 16 upstream of the valve 18 to the downstream location 24 through the

relatively small ine 26. In so doing air already present in the pipe downstream of the material but upstream of the valve exhausts and the coal is allowed to move up to the valve 18. The control valve 28 is shut. The valve 18 is then opened for a desired period of time dependent upon delivery requirements and then closes. At or before the instance of closure of valve 18, air is injected into the delivery pipe through the passages 40 in the gas introduction means 20. This air may have a pressure of for example 40 psi (2.8 Kgf/cm2) and the injection period may be of the order of 5 seconds; thereafter the air supply is stopped. The air so injected propels the coal, now downstream of the valve 18, along the delivery pipe 16 to the combustion chamber of the boiler.

In a modification of the embodiment herein described, the vent 22 and associated by pass line 26 may be omitted.

With a long delivery pipe, additional gas introduction means may be provided spaced apart along the length of the pipe synchronised with the operation of the gas introduction means adjacent the valve, to assist conveyance of material along the delivery pipe. It is to be understood that while the present invention finds advantageous application to fuel feed systems for coal fired boilers, it is not so limited in its scope and has application generally for particulate materials.

PATENT CLAIMS:

1.    Apparatus for conveying particulate material from storage along a delivery pipe, the apparatus comprising storage means having an inlet for particulate material and an outlet connected to one end of a delivery pipe, characterised by means (10) for supplying gas under pressure to the material in the storage means (2), a valve (18) in the delivery pipe (16), a gas vent (22) located in the delivery pipe (16) upstream of the valve (18) and connected into the delivery pipe (16) downstream of the valve (18), and gas introduction means (20) for introducing gas under pressure into the delivery pipe (16) adjacent the valve (18), the valve (18) and gas introduction means (10) being operable cyclically to cause discrete quantities of the material in the storage means (2) to be conveyed along the pipe (16).

2.    Apparatus according to claim 1, characterised in that the valve (18) is located in the delivery pipe (16) adjacent the outlet (14) of the storage means (12).

3.    Apparatus according to claim 1 or 2 characterised in that the valve (18) is located upstream of the gas introduction means (20).

4.    Apparatus according to any one of the preceding claims characterised in that a by-pass line (26) connects the vent (22) to the downstream side of the valve (18) and incorporates a control valve (28).

5.    Apparatus according to any one of the preceding claims characterised in that the gas introduction means (20) is adapted to provide a flow of gas under pressure directed along the discharge pipe (26) in the conveying direction.

6.    Apparatus according to claim 5 characterised in that the gas introduction means (20) includes an annular wall (30) provided with a plurality of gas inlets (40) inclined to the axis of the pipe (16) in the conveying direction.

7. A method of operating the apparatus claimed in the preceding claims characterised by the steps of charging the storage means (2) with particulate material, pressurising the storage means (2) whilst maintaining the valve (18) in the delivery pipe (16) shut, opening the control valve (28) in the by-pass line (26) to vent the delivery pipe (16) thereby to allow the material in the delivery pipe (16) to move up to the valve (18), opening the valve (18) to allow passage of a discrete quantity of the particulate material, closing the valve (18), and introducing gas through the gas introduction means (20) thereby to propel the discrete quantity of material along the delivery pipe (16) for discharge.

8. A method of conveying particulate material from storage means (2) along a delivery pipe (16) connected to the outlet (14) of the storage means (2), the delivery pipe (16) being provided with a valve (18) and gas introduction means (20) for introducing gas under pressure into the delivery pipe (16), the method characterised by the steps of supplying gas under pressure to the material in the storage means (2) and operating the valve (18) and the gas introduction means (20) cyclically to cause discrete quantities of the material to be conveyed along the pipe (16).

9. A method according to claim 8 characterised in that in a cycle, the valve (18) and the gas introduction means (20 are operated alternately.

FIG. I

FIG. 2

FIG. 3